# EUROPEAN PATENT APPLICATION

(11) **EP 4 567 497 A1**
(43) Date of publication of application: **11.06.2025**
(21) Application number: 24192214.5
(22) Date of filing: 31.07.2024
(51) Int. Cl.: G02B 27/01, G02B 17/08, G02B 27/28

(54) **INSERT-FREE PRESCRIPTION CORRECTION OPTICAL MODULE**

(30) Priority: 05.12.2023 US 202318529317
(71) Applicant: Meta Platforms Technologies, LLC, Menlo Park, CA 94025 (US)
(72) Inventor: Bollman, Brent, Menlo Park (US); Wong, Timothy Louis, Menlo Park (US); Sohn, Alexander, Menlo Park (US)
(74) Representative: Murgitroyd & Company

(57) **Abstract**

An optical module includes an electronic display configured to project image light along an optical axis and a lens assembly aligned with the optical axis, the lens assembly including (i) a primary optical element having a cylindrical surface profile defining a primary cylinder axis rotatably alignable with a first direction, and (ii) a secondary optical element having a cylindrical surface profile defining a secondary cylinder axis rotatably alignable with a second direction. Astigmatism correction for the optical module may be achieved through independent rotation and alignment of the primary and secondary optical elements with respective correction settings.

## Description

### FIELD OF THE DISCLOSURE

The present disclosure is generally directed to optical modules that may provide adjustable accommodation, devices including optical modules, and associated methods or apparatus.

### BACKGROUND

An optical module may include one or more lenses having adjustable accommodation. Examples include lens assemblies having variable accommodation, including compact lenses, lenses with a relatively wide accommodation range, and lenses with variable or constant cylinder. Example lens architectures may provide prescriptive lens correction for users, for example, users of AR/VR apparatus including head-mounted AR/VR apparatus.

Head-mounted displays (HMDs) have been increasingly used for a variety of purposes, including video playback, sports, and gaming, and are ubiquitous in virtual reality (VR), augmented reality (AR), and mixed reality (MR) devices and headsets, where the display may be advantageously compact, lightweight and configured to provide high resolution images with a large field of view (FOV).

A head-mounted display generally includes a display element configured to generate or modify image light that is directed through a lens system to reach a user's eyes. The lens system may include multiple optical elements, such as lenses, waveplates, reflectors, etc., for directing and focusing the light. To achieve a compact form factor while maintaining desirable optical characteristics, a pancake lens may be incorporated into the lens system of a head-mounted display.

Pancake lenses are generally flat, relatively thin assemblies that are principally valued for providing quality optics in a compact package. Using polarization and reflection elements, light may be directed back and forth multiple times along an optical path within a pancake lens. This approach, known as pancake or folded optics, allows the lens and the display to be located in close proximity, resulting in a more compact system. In some embodiments, a pancake optical module may include or constitute a catadioptric optical system.

### SUMMARY

According to a first aspect, there is provided an optical module comprising: an electronic display configured to project image light along an optical axis; and a lens assembly aligned with the optical axis, the lens assembly comprising: a primary optical element having a cylindrical surface profile defining a primary cylinder axis rotatably alignable with a first direction; and a secondary optical element having a cylindrical surface profile defining a secondary cylinder axis rotatably alignable with a second direction.

In some embodiments, the primary optical element and the secondary optical element are independently rotatable about the optical axis.

In some embodiments, the primary optical element and the secondary optical element each comprise an aspherical surface profile and each respective cylindrical surface profile is merged with each respective aspherical surface profile.

In some embodiments, the primary optical element and the secondary optical element are each bilaterally symmetric.

In some embodiments, the cylindrical surface profile of the primary optical element and the cylindrical surface profile of the secondary optical element each comprise approximately 2.5 D of cylindrical power.

In some embodiments, the primary cylinder axis is configured to be aligned by a user with the first direction and the secondary cylinder axis is configured to be aligned by the user with the second direction.

In some embodiments, the first and second directions are substantially orthogonal to the optical axis.

In some embodiments, the lens assembly comprises a pancake lens.

In some embodiments, the primary optical element and the secondary optical element each comprise a meniscus lens.

In some embodiments, the primary optical element is spaced away from the secondary optical element.

In some embodiments, the primary optical element is spaced away from the secondary optical element by an air gap.

In some embodiments, a spacing between the primary optical element and the secondary optical element along the optical axis is adjustable.

In some embodiments, a working distance between the lens assembly and the electronic display is adjustable.

In some embodiments, the primary optical element and the secondary optical element each comprise a mirrored surface.

In some embodiments, the primary optical element comprises a beamsplitter element and the secondary optical element comprises a reflective polarizer.

According to a further aspect, there is provided a pancake lens comprising: a primary optical element configured to receive image light from a display, the primary optical element configured to be rotatable about an optical axis and comprising a primary cylindrical surface profile; and a secondary optical element configured to receive the image light from the primary optical element, the secondary optical element configured to be rotatable about the optical axis and comprising a secondary cylindrical surface profile.

In some embodiments, the primary cylindrical surface profile and the secondary cylindrical surface profile each comprise approximately 2.5 D of cylindrical power.

In some embodiments, the primary optical element comprises a primary aspherical surface profile and the primary cylindrical surface profile is overlaid on the primary aspherical surface profile; and the secondary optical element comprises a secondary aspherical surface profile and the secondary cylindrical surface profile is overlaid on the secondary aspherical surface profile.

According to a further aspect, there is provided a method comprising: directing image light along an optical axis and through a pancake lens comprising a primary optical element having a primary cylindrical surface profile and a secondary optical element having a secondary cylindrical surface profile; rotatably aligning the primary optical element with a first direction; and rotatably aligning the secondary optical element with a second direction to provide astigmatism correction to the image light.

In some embodiments, rotatably aligning the primary and secondary optical elements comprises aligning the primary optical element with respect to the secondary optical element, and aligning both the primary optical element and the secondary optical element with respect to a fixed datum.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1A is a simplified cross-sectional view of an example optical module including a pancake lens in accordance with some embodiments.
FIG. 1B is a simplified cross-sectional view of an example optical module including a pancake lens and a planar waveplate according to some embodiments.
FIG. 1C is a simplified cross-sectional view of an example optical module including a pancake lens and a curved waveplate according to some embodiments.
FIG. 2 shows the optical path through an example pancake lens according to certain embodiments.
FIG. 3 is a schematical cross-section view of a variable prescription pancake lens architecture according to some embodiments.
FIG. 4 is a schematic cross-sectional view of a variable prescription pancake lens architecture according to further embodiments.
FIG. 5 is an illustration of exemplary augmented-reality glasses that may be used in connection with embodiments of this disclosure.
FIG. 6 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

The present disclosure is generally directed to optical modules that may provide adjustable accommodation, devices including optical modules, and associated methods or apparatus. As is explained in greater detail herein, embodiments of the present disclosure may include an optical module suitable for virtual and/or augmented reality systems.

An optical module may include one or more lenses having adjustable accommodation. Examples include lens assemblies having variable accommodation, including compact lenses, lenses with a relatively wide accommodation range, and lenses with variable or constant cylinder. Example lens architectures may provide prescriptive lens correction for users, for example, users of AR/VR apparatus including head-mounted AR/VR apparatus.

Head-mounted displays (HMDs) have been increasingly used for a variety of purposes, including video playback, sports, and gaming, and are ubiquitous in virtual reality (VR), augmented reality (AR), and mixed reality (MR) devices and headsets, where the display may be advantageously compact and light weight and configured to provide high resolution images with a large field of view (FOV).

A head-mounted display generally includes a display element configured to generate or modify image light that is directed through a lens system to reach a user's eyes. The lens system may include multiple optical elements, such as lenses, waveplates, reflectors, etc., for directing and focusing the light. To achieve a compact form factor while maintaining desirable optical characteristics, a pancake lens may be incorporated into the lens system of a head-mounted display.

Pancake lenses are generally flat, relatively thin assemblies that are principally valued for providing quality optics in a compact package. Using polarization and reflection elements, light may be directed back and forth multiple times along an optical path within a pancake lens. This approach, known as pancake or folded optics, allows the lens and the display to be located in close proximity, resulting in a more compact system. In some embodiments, a pancake optical module may include or constitute a catadioptric optical system.

To accommodate users needing vision correction, additional optical elements may be added to a pancake optical module. However, these additional elements may add thickness and weight as well as design integration and supply chain complexity insomuch as each prescription may have a unique geometry. Notwithstanding recent developments, it would be advantageous to provide a pancake lens architecture having prescription correction including tunable astigmatism correction.

According to particular embodiments, individual lens elements in an optical lens assembly may be configured to include cylindrical power that is overlaid on nominal spherical or aspherical power. This approach obviates the use of separate, discrete focusing elements to correct for astigmatism. The magnitude of the cylindrical power in each lens element may be approximately 2.5 Diopters. By way of example, an optical lens assembly may include a pair of such lens elements that are aligned along a common optical axis. The optical lens assembly may be located proximate to a display and configured to convey image light from the display to a user.

First and second lens elements including fixed cylindricity may be individually rotatable with respect to the optical axis of the lens assembly. Prior to or during use, the orientation of the lens elements may be set by a user to provide prescription correction. Specifically, the relative orientation of the first and second lens elements may be set to tune astigmatism correction, whereas the absolute orientation of the lens pair with respect to a fixed datum may control the effective cylindrical axis of the applied cylindrical power. Actuation of the lens elements may be manual or driven by a motor, for example.

According to exemplary embodiments, an optical module includes an electronic display configured to project image light along an optical axis and a lens assembly aligned with the optical axis, the lens assembly including (i) a primary optical element having a cylindrical surface profile defining a primary cylinder axis rotatably alignable with a first direction, and (ii) a secondary optical element having a cylindrical surface profile defining a secondary cylinder axis rotatably alignable with a second direction. The optical elements may be formed from any suitable material, including optical grade organic or inorganic compositions, such as polycarbonate.

A method includes directing image light along an optical axis and through a pancake lens including a primary optical element having a primary cylindrical surface profile and a secondary optical element having a secondary cylindrical surface profile, rotatably aligning the primary optical element to a first orientation, and rotatably aligning the secondary optical element to a second orientation to provide astigmatism correction to the image light.

Features from any of the embodiments described herein may be used in combination with one another in accordance with the general principles described herein. These and other embodiments, features, and advantages will be more fully understood upon reading the following detailed description in conjunction with the accompanying drawings and claims.

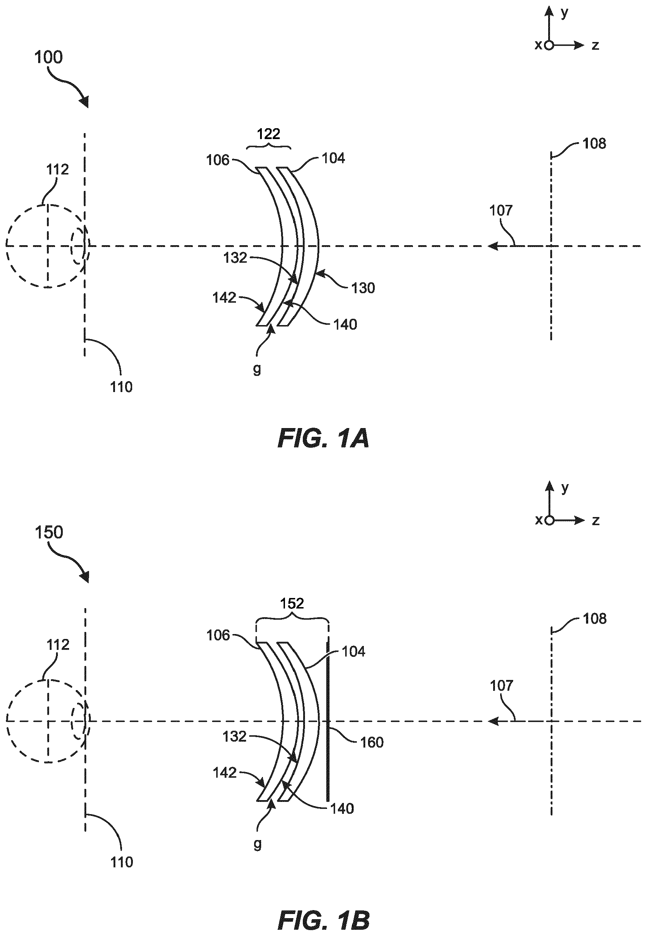

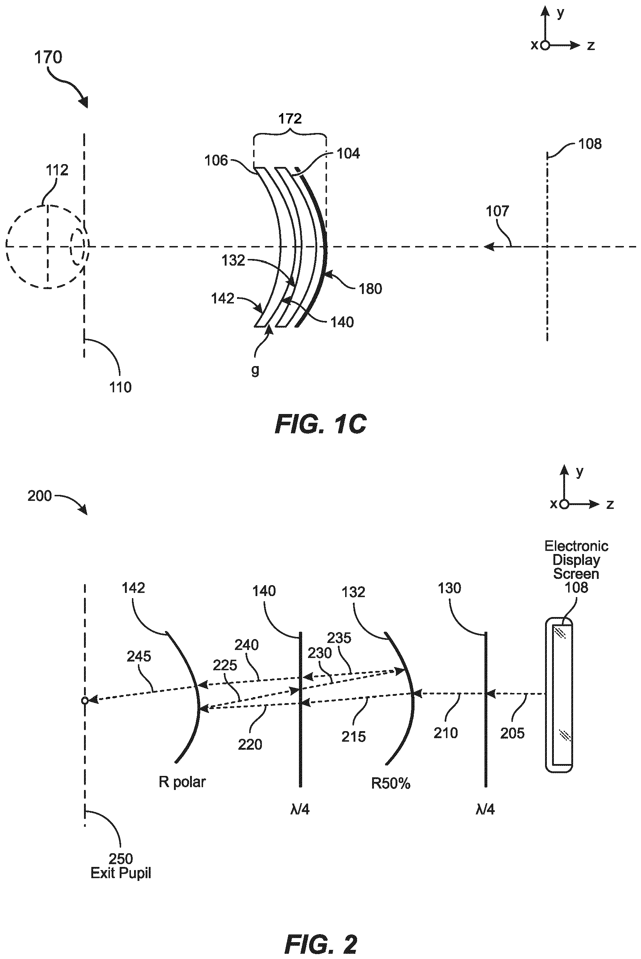

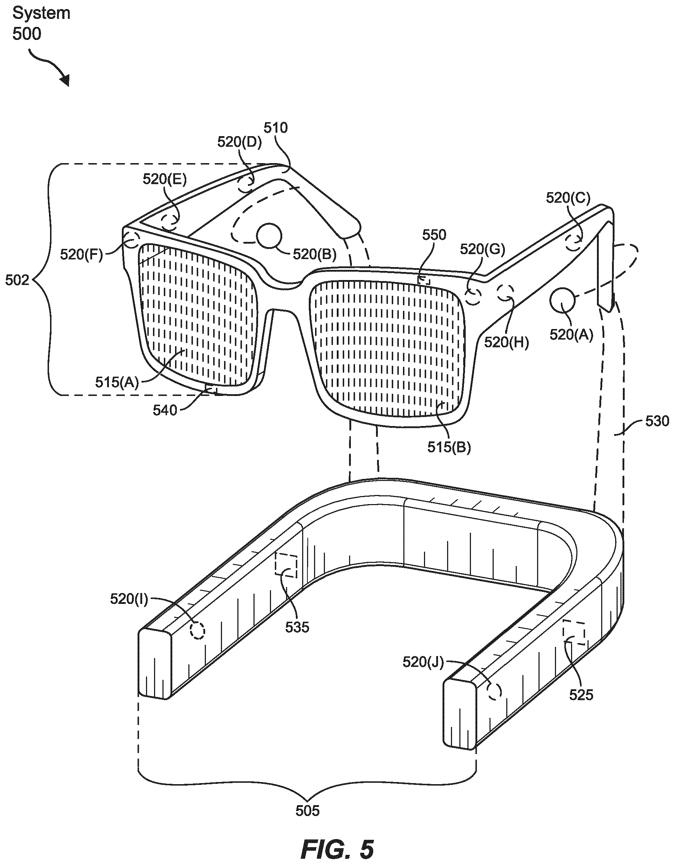

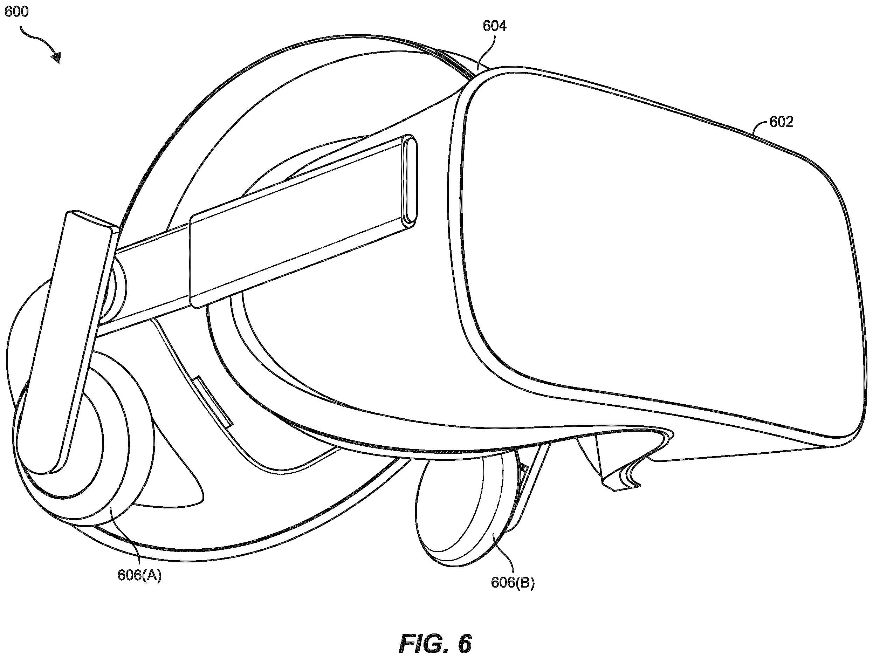

The following will provide, with reference to FIGS. 1-6, detailed descriptions of prescription correction optical modules and their methods of operation. The discussion associated with FIGS. 1-4 includes a description of pancake lens architectures having adjustable cylindrical power and featuring real-time astigmatism correction. FIGS. 5 and 6 illustrate exemplary augmented-reality and virtual-reality devices that may be used in connection with various embodiments.

FIG. 1A is a cross-sectional view of an optical module 100 including a pancake lens 122. Pancake lens 122 may constitute a part of a head-mounted display and may include a primary optical element 104 and a secondary optical element 106 that are aligned with a common optical axis and spatially offset by a gap (g). Primary and secondary optical elements are configured to direct light 107 emitted from an electronic display 108 to an exit pupil 110 where a user's eye 112 is positioned. For purposes of illustration, FIG. 1A shows a cross-section of the pancake lens 122 associated with a single eye 112, but a head-mounted display may include a second pancake lens, separate from the pancake lens 122 shown in FIG. 1A, to provide light from an electronic display that is directed by the second pancake lens to another eye of the user.

The light 107 emitted from the electronic display 108 may be linearly polarized. In some embodiments, the electronic display 108 may include one or more linear polarizers configured to linearly polarize light emitted from the electronic display 108. Alternatively, light emitted from light emitting components (e.g., LEDs) of the electronic display 108 may be emitted as linearly polarized light.

One or more surfaces of the primary optical element 104 and the secondary optical element 106 may be shaped to correct for field curvature. For instance, one or more surfaces of the primary optical element 104 and/or the secondary optical element 106 may be spherically concave, spherically convex, aspherically concave, aspherically convex, a freeform shape, or other shape that is adapted to mitigate field curvature. In some embodiments, the shape of one or more surfaces of the primary optical element 104 and the secondary optical element 106 may be designed to additionally correct for other forms of optical aberration. As disclosed further herein, cylindrical power may be co-integrated with nominal spherical or aspherical power, for example. In some embodiments, one or more of the optical elements 104, 106 within pancake lens 122 may include one or more coatings, such as anti-reflective coatings, to reduce ghost images and enhance contrast.

As shown, the primary optical element 104 and the secondary optical element 106 may be characterized as meniscus lenses, each having a convex surface and an opposing concave surface. In exemplary embodiments, the primary optical element 104 and the secondary optical element 106 may each include a mirrored surface and an opposing waveplate surface although alternate configurations are contemplated.

In exemplary embodiments, the primary optical element 104 may include a waveplate surface 130 proximate to its convex side facing display 108 and a mirrored surface 132 proximate to its concave side, and the secondary optical element 106 may include a waveplate surface 140 proximate to its convex side facing display 108 and a mirrored surface 142 proximate to its concave side. The waveplate surfaces 130, 140 and the mirrored surfaces 132, 142 may include separate layers that are bonded to or formed over a respective portion of a corresponding optical element. In some instantiations, the above-described location of the waveplate surfaces and the mirrored surfaces with respect to the convex and concave surfaces of each optical element may be reversed.

Waveplate 130 and waveplate 140 may each include an element that is configured to alter the polarization of incident light. A quarter waveplate, for example, may be configured to convert linearly polarized light into circularly polarized light or vice versa, and may be formed from a birefringent material such as quartz or a liquid crystal.

In some embodiments, mirrored surface 132 may include a half mirror that is partially reflective to received light. Mirrored surface 132 may be configured to transmit 50% of incident light and reflect 50% of incident light, for example. Mirrored surface 142 may include a reflective polarizer that is configured to reflect incident light of a first polarization and transmit incident light of a second polarization. For example, mirrored surface 142 may be configured to reflect linearly polarized light with a polarization direction in the x-direction and pass light that is linearly polarized in the y-direction.

In some embodiments, the primary optical element waveplate surface 130 and the secondary optical element waveplate surface 140 may be concentric or substantially concentric. Concentric curvatures may increase the intended throughput of light, suppress stray light, and improve overall contrast in an image viewed by a user. Operation of pancake lens 122 is discussed below with respect to FIG. 2.

Referring to FIG. 1B, shown is a cross-sectional view of an optical module 150 including a pancake lens 152, and further including a planar waveplate 160 disposed proximate to the convex surface of primary optical element 104. That is, the pancake lens 152 of FIG. 1B is similar to the pancake lens 122 of FIG. 1A, except the pancake lens 152 does not include a co-integrated waveplate surface 130 and instead includes a separate planar waveplate 160. Waveplate 160 may include a 50-50 mirror, for example.

Referring to FIG. 1C, shown is a cross-sectional view of an optical module 170 including a pancake lens 172, and further including a non-planar waveplate 180 disposed proximate to the convex surface of primary optical element 104. Pancake lens 172 of FIG. 1C is similar to pancake lens 152 of FIG. 1B, except the pancake lens 172 includes a discrete curved waveplate 180 rather than a discrete planar waveplate 160.

The non-planar waveplate 180 may have a shape that matches or substantially matches a shape of the primary optical element 104. For example, the non-planar waveplate 180 and the primary optical element 104 may be concentric or substantially concentric. Relative to the planar waveplate of FIG. 1B, the curved waveplate 180 of FIG. 1C may advantageously increase the intended throughput of light, suppress stray light, and improve the overall contrast of image light viewed by a user.

Referring to FIG. 2, shown is the propagation of light through pancake lens 122 of FIG. 1A. In the illustrated embodiment 200, light 205 exiting electronic display 108 may be linearly polarized and directed toward waveplate surface 130. The orientation of the waveplate axis relative to the incident linearly polarized light influences the handedness of emitted circularly polarized light. For instance, waveplate surface 130 may include a quarter waveplate having an axis oriented at 45° relative to the direction of the polarization of light 205 such that waveplate surface 130 changes the linearly polarized light 205 to circularly polarized light 210. The polarization of the light 210 may be clockwise or counterclockwise.

A first portion of the light 210 may be reflected by the mirrored surface 132 while a second portion of the light 215 may be transmitted through mirrored surface 132 toward secondary optical element waveplate surface 140. In some embodiments, the mirrored surface 132 may be configured to reflect 50% of incident light.

Secondary optical element waveplate surface 140 may include a quarter waveplate configured to change circularly polarized light 215 to linearly polarized light 220. In turn, the light 220 is incident on reflective polarizer surface 142, which may be configured to reflect light that is polarized in a blocking direction (e.g., the x-direction) and transmit light that is polarized in a perpendicular direction (e.g., the y-direction). The reflected light 225 is directed back toward waveplate surface 140, which changes the linearly polarized light 225 to circularly polarized light 230, and toward mirrored surface 132, which again reflects a portion of the polarized light 230 into light beam 235.

Circularly polarized light 235 may be circularly polarized but of a handedness that is opposite to that of light beam 230 and light beam 215 due to the reflection from mirrored surface 132. Waveplate surface 140 changes the polarization of circularly polarized light 235 to linearly polarized light 240. However, because the handedness of light beam 235 is opposite to that of light beam 215, the polarization of light 240 is perpendicular to that of the light 220. Accordingly, light 240 may be linearly polarized in a direction perpendicular to the blocking direction of reflective polarizer surface 142 and may therefore be transmitted by the reflective polarizer surface 142 as light 245 to the exit pupil 250. Light propagating through the pancake lens 122 thus may undergo multiple reflections between the secondary optical element 106 and the primary optical element 104.

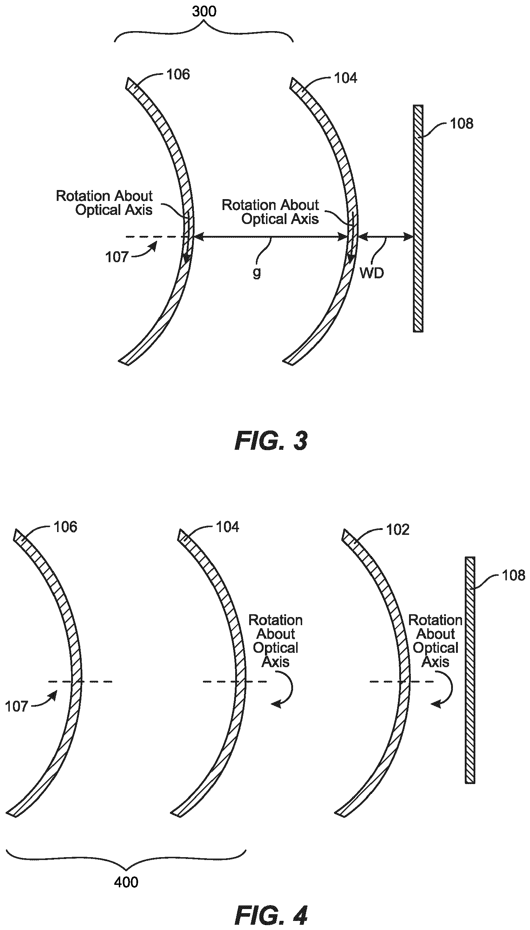

Turning to FIG. 3, a pancake lens 300 may include a primary optical element 104 configured to receive image light from a display 108 and a secondary optical element 106 configured to receive the image light from the primary optical element 104. The primary optical element 104 is configured to be rotatable about optical axis 107 and may include a primary cylindrical surface profile, and the secondary optical element 106 is configured to be rotatable about the optical axis 107 and may include a secondary cylindrical surface profile. For example, cylindrical optical power may be co-integrated into each convex surface of the primary and secondary optical elements.

The primary optical element 104 and the secondary optical element 106 may be bilaterally symmetric and spaced away from each other, e.g., by an air gap (g). According to particular embodiments, the spacing between the optical elements may be arranged such that the primary optical element 104 and the secondary optical element 106 may be rotated independently about the optical axis 107. For instance, each optical element 104, 106 may be freely and reversibly rotated through an angular range of 0 to 2p radians. Astigmatism correction may be achieved by rotating the primary and secondary optical elements to a predetermined inter-element angular relationship, and aligning the oriented optical element pair to a further relationship with a fixed point of reference.

In some embodiments, the spacing along the optical axis 107 between the primary and secondary optical elements 104, 106 may be adjustable. That is, the gap (g) may be set to a desired value. Moreover, the position of the primary and/or secondary optical elements 104, 106 along optical axis 107 may be set to adjust the working distance (WD) between the pancake lens 300 and the electronic display 108. As will be appreciated, the overall optical power (i.e., focal length) of the pancake lens may be tuned by adjusting one or more of the spacing between the primary and secondary optical elements and the working distance between the pancake lens and the display.

In the illustrated embodiment, the primary optical element 104 and the secondary optical element 106 may each include an aspherical surface profile where each respective cylindrical surface profile is merged with a corresponding aspherical surface profile. The cylindrical surface profile of the primary optical element 104 and the cylindrical surface profile of the secondary optical element 106 may each include approximately 2.5 Diopters of refractive cylindrical power, although lesser and greater values are contemplated. The primary optical element 104 and the secondary optical element 106 may each include a meniscus lens.

According to further embodiments, tunable cylindrical power and associated optical elements may be incorporated into an optical module independent of the folded optics. Such a configuration may beneficially decouple astigmatism correction from the lens power used to correct farsightedness or nearsightedness. For example, an optical module may include separate spherical and cylindrical elements, which may simplify and improve polarization dynamics in some embodiments.

In this vein, turning to FIG. 4, a pancake lens 400 includes a primary optical element 104 and a secondary optical element 106 configured to receive image light from the primary optical element 104. As in the embodiments of FIG. 3, primary optical element 104 may include a waveplate and a 50-50 mirror, e.g., formed over opposing surfaces, and secondary optical element 106 may include a waveplate and a reflective polarizer, e.g., formed over opposing surfaces.

In the embodiment of FIG. 4, an additional optical element 102 may be located between primary optical element 104 and the electronic display 108, i.e., outside of the cavity of pancake lens 400. Cylindrical power may be co-integrated into a surface of each of optical element 102 and primary optical element 104, and optical element 102 and primary optical element 104 may be independently rotatable about optical axis 107. Cylindrical power and orientation may be tuned by setting the relative and absolute orientations, respectively, of the optical element 102 and the primary optical element 104 while avoiding rotation of secondary optical element 106 and its attendant polarization sensitive components.

As disclosed herein, a pancake optical module may be configured to provide astigmatism correction without additional optical elements added to the optical module. An exemplary optical module includes a pair of inline optical elements each having a complementary 2.5 D cylindrical surface. The cylindrical surface profile of the primary optical element 104 and the cylindrical surface profile of the optical element 102 may each include approximately 2.5 Diopters of refractive cylindrical power, although lesser and greater values are contemplated. By rotating the relative and absolute angles of where these 2.5 D surfaces lie relative to a fixed datum, the power and angle of astigmatism can be readily tuned. That is, the amount of cylindrical power may be tuned by adjusting the relative angular relationship between the optical elements, whereas the overall position of the optical elements, e.g., with respect to a fixed point such as the eye of a user, may change the effective axis of the cylindrical power. This configuration adds minimal TTL to a device such as a headset and allows a user to make a prescription adjustment without introducing any additional elements to the optical module.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (e.g., augmented-reality system 500 in FIG. 5) or that visually immerses a user in an artificial reality (e.g., virtual-reality system 600 in FIG. 6). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 5, augmented-reality system 500 may include an eyewear device 502 with a frame 510 configured to hold a left display device 515(A) and a right display device 515(B) in front of a user's eyes. Display devices 515(A) and 515(B) may act together or independently to present an image or series of images to a user. While augmented-reality system 500 includes two displays, embodiments of this disclosure may be implemented in augmented-reality systems with a single NED or more than two NEDs.

In some embodiments, augmented-reality system 500 may include one or more sensors, such as sensor 540. Sensor 540 may generate measurement signals in response to motion of augmented-reality system 500 and may be located on substantially any portion of frame 510. Sensor 540 may represent a position sensor, an inertial measurement unit (IMU), a depth camera assembly, a structured light emitter and/or detector, or any combination thereof. In some embodiments, augmented-reality system 500 may or may not include sensor 540 or may include more than one sensor. In embodiments in which sensor 540 includes an IMU, the IMU may generate calibration data based on measurement signals from sensor 540. Examples of sensor 540 may include, without limitation, accelerometers, gyroscopes, magnetometers, other suitable types of sensors that detect motion, sensors used for error correction of the IMU, or some combination thereof.

Augmented-reality system 500 may also include a microphone array with a plurality of acoustic transducers 520(A)-520(J), referred to collectively as acoustic transducers 520. Acoustic transducers 520 may be transducers that detect air pressure variations induced by sound waves. Each acoustic transducer 520 may be configured to detect sound and convert the detected sound into an electronic format (e.g., an analog or digital format). The microphone array in FIG. 5 may include, for example, ten acoustic transducers: 520(A) and 520(B), which may be designed to be placed inside a corresponding ear of the user, acoustic transducers 520(C), 520(D), 520(E), 520(F), 520(G), and 520(H), which may be positioned at various locations on frame 510, and/or acoustic transducers 520(I) and 520(J), which may be positioned on a corresponding neckband 505.

In some embodiments, one or more of acoustic transducers 520(A)-(F) may be used as output transducers (e.g., speakers). For example, acoustic transducers 520(A) and/or 520(B) may be earbuds or any other suitable type of headphone or speaker.

The configuration of acoustic transducers 520 of the microphone array may vary. While augmented-reality system 500 is shown in FIG. 5 as having ten acoustic transducers 520, the number of acoustic transducers 520 may be greater or less than ten. In some embodiments, using higher numbers of acoustic transducers 520 may increase the amount of audio information collected and/or the sensitivity and accuracy of the audio information. In contrast, using a lower number of acoustic transducers 520 may decrease the computing power required by an associated controller 550 to process the collected audio information. In addition, the position of each acoustic transducer 520 of the microphone array may vary. For example, the position of an acoustic transducer 520 may include a defined position on the user, a defined coordinate on frame 510, an orientation associated with each acoustic transducer 520, or some combination thereof.

Acoustic transducers 520(A) and 520(B) may be positioned on different parts of the user's ear, such as behind the pinna, behind the tragus, and/or within the auricle or fossa. Or, there may be additional acoustic transducers 520 on or surrounding the ear in addition to acoustic transducers 520 inside the ear canal. Having an acoustic transducer 520 positioned next to an ear canal of a user may enable the microphone array to collect information on how sounds arrive at the ear canal. By positioning at least two of acoustic transducers 520 on either side of a user's head (e.g., as binaural microphones), augmented-reality device 500 may simulate binaural hearing and capture a 3D stereo sound field around about a user's head. In some embodiments, acoustic transducers 520(A) and 520(B) may be connected to augmented-reality system 500 via a wired connection 530, and in other embodiments acoustic transducers 520(A) and 520(B) may be connected to augmented-reality system 500 via a wireless connection (e.g., a Bluetooth connection). In still other embodiments, acoustic transducers 520(A) and 520(B) may not be used at all in conjunction with augmented-reality system 500.

Acoustic transducers 520 on frame 510 may be positioned along the length of the temples, across the bridge, above or below display devices 515(A) and 515(B), or some combination thereof. Acoustic transducers 520 may be oriented such that the microphone array is able to detect sounds in a wide range of directions surrounding the user wearing the augmented-reality system 500. In some embodiments, an optimization process may be performed during manufacturing of augmented-reality system 500 to determine relative positioning of each acoustic transducer 520 in the microphone array.

In some examples, augmented-reality system 500 may include or be connected to an external device (e.g., a paired device), such as neckband 505. Neckband 505 generally represents any type or form of paired device. Thus, the following discussion of neckband 505 may also apply to various other paired devices, such as charging cases, smart watches, smart phones, wrist bands, other wearable devices, hand-held controllers, tablet computers, laptop computers, other external compute devices, etc.

As shown, neckband 505 may be coupled to eyewear device 502 via one or more connectors. The connectors may be wired or wireless and may include electrical and/or non-electrical (e.g., structural) components. In some cases, eyewear device 502 and neckband 505 may operate independently without any wired or wireless connection between them. While FIG. 5 illustrates the components of eyewear device 502 and neckband 505 in example locations on eyewear device 502 and neckband 505, the components may be located elsewhere and/or distributed differently on eyewear device 502 and/or neckband 505. In some embodiments, the components of eyewear device 502 and neckband 505 may be located on one or more additional peripheral devices paired with eyewear device 502, neckband 505, or some combination thereof.

Pairing external devices, such as neckband 505, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 500 may be provided by a paired device or shared between a paired device and an eyewear device, thus reducing the weight, heat profile, and form factor of the eyewear device overall while still retaining desired functionality. For example, neckband 505 may allow components that would otherwise be included on an eyewear device to be included in neckband 505 since users may tolerate a heavier weight load on their shoulders than they would tolerate on their heads. Neckband 505 may also have a larger surface area over which to diffuse and disperse heat to the ambient environment. Thus, neckband 505 may allow for greater battery and computation capacity than might otherwise have been possible on a stand-alone eyewear device. Since weight carried in neckband 505 may be less invasive to a user than weight carried in eyewear device 502, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 505 may be communicatively coupled with eyewear device 502 and/or to other devices. These other devices may provide certain functions (e.g., tracking, localizing, depth mapping, processing, storage, etc.) to augmented-reality system 500. In the embodiment of FIG. 5, neckband 505 may include two acoustic transducers (e.g., 520(I) and 520(J)) that are part of the microphone array (or potentially form their own microphone subarray). Neckband 505 may also include a controller 525 and a power source 535.

Acoustic transducers 520(I) and 520(J) of neckband 505 may be configured to detect sound and convert the detected sound into an electronic format (analog or digital). In the embodiment of FIG. 5, acoustic transducers 520(I) and 520(J) may be positioned on neckband 505, thereby increasing the distance between the neckband acoustic transducers 520(I) and 520(J) and other acoustic transducers 520 positioned on eyewear device 502. In some cases, increasing the distance between acoustic transducers 520 of the microphone array may improve the accuracy of beamforming performed via the microphone array. For example, if a sound is detected by acoustic transducers 520(C) and 520(D) and the distance between acoustic transducers 520(C) and 520(D) is greater than, e.g., the distance between acoustic transducers 520(D) and 520(E), the determined source location of the detected sound may be more accurate than if the sound had been detected by acoustic transducers 520(D) and 520(E).

Controller 525 of neckband 505 may process information generated by the sensors on neckband 505 and/or augmented-reality system 500. For example, controller 525 may process information from the microphone array that describes sounds detected by the microphone array. For each detected sound, controller 525 may perform a direction-of-arrival (DOA) estimation to estimate a direction from which the detected sound arrived at the microphone array. As the microphone array detects sounds, controller 525 may populate an audio data set with the information. In embodiments in which augmented-reality system 500 includes an inertial measurement unit, controller 525 may compute all inertial and spatial calculations from the IMU located on eyewear device 502. A connector may convey information between augmented-reality system 500 and neckband 505 and between augmented-reality system 500 and controller 525. The information may be in the form of optical data, electrical data, wireless data, or any other transmittable data form. Moving the processing of information generated by augmented-reality system 500 to neckband 505 may reduce weight and heat in eyewear device 502, making it more comfortable to the user.

Power source 535 in neckband 505 may provide power to eyewear device 502 and/or to neckband 505. Power source 535 may include, without limitation, lithium ion batteries, lithium-polymer batteries, primary lithium batteries, alkaline batteries, or any other form of power storage. In some cases, power source 535 may be a wired power source. Including power source 535 on neckband 505 instead of on eyewear device 502 may help better distribute the weight and heat generated by power source 535.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 600 in FIG. 6, that mostly or completely covers a user's field of view. Virtual-reality system 600 may include a front rigid body 602 and a band 604 shaped to fit around a user's head. Virtual-reality system 600 may also include output audio transducers 606(A) and 606(B). Furthermore, while not shown in FIG. 6, front rigid body 602 may include one or more electronic elements, including one or more electronic displays, one or more inertial measurement units (IMUs), one or more tracking emitters or detectors, and/or any other suitable device or system for creating an artificial reality experience.

Artificial-reality systems may include a variety of types of visual feedback mechanisms. For example, display devices in augmented-reality system 500 and/or virtual-reality system 600 may include one or more liquid crystal displays (LCDs), light emitting diode (LED) displays, organic LED (OLED) displays, digital light project (DLP) micro-displays, liquid crystal on silicon (LCoS) micro-displays, and/or any other suitable type of display screen. Artificial-reality systems may include a single display screen for both eyes or may provide a display screen for each eye, which may allow for additional flexibility for varifocal adjustments or for correcting a user's refractive error. Some artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some artificial-reality systems may include one or more projection systems. For example, display devices in augmented-reality system 500 and/or virtual-reality system 600 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

Artificial-reality systems may also include various types of computer vision components and subsystems. For example, augmented-reality system 500 and/or virtual-reality system 600 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

Artificial-reality systems may also include one or more input and/or output audio transducers. In the examples shown in FIG. 6, output audio transducers 606(A) and 606(B) may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

While not shown in FIG. 5, artificial-reality systems may include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to any claims appended hereto and their equivalents in determining the scope of the present disclosure.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to a lens element that comprises or includes polycarbonate include embodiments where a lens element consists essentially of polycarbonate and embodiments where a lens element consists of polycarbonate.

## Claims

1. An optical module comprising:
an electronic display configured to project image light along an optical axis; and
a lens assembly aligned with the optical axis, the lens assembly comprising:
a primary optical element having a cylindrical surface profile defining a primary cylinder axis rotatably alignable with a first direction; and
a secondary optical element having a cylindrical surface profile defining a secondary cylinder axis rotatably alignable with a second direction.

2. The optical module of claim 1, wherein the primary optical element and the secondary optical element are independently rotatable about the optical axis; and/or preferably
wherein the primary optical element and the secondary optical element each comprise an aspherical surface profile and each respective cylindrical surface profile is merged with each respective aspherical surface profile; and/or preferably
wherein the primary optical element and the secondary optical element are each bilaterally symmetric.

3. The optical module of claim 1 or claim 2, wherein the cylindrical surface profile of the primary optical element and the cylindrical surface profile of the secondary optical element each comprise approximately 2.5 D of cylindrical power.

4. The optical module of any preceding claim, wherein the primary cylinder axis is configured to be aligned by a user with the first direction and the secondary cylinder axis is configured to be aligned by the user with the second direction.

5. The optical module of any preceding claim, wherein the first and second directions are substantially orthogonal to the optical axis.

6. The optical module of any preceding claim, wherein the lens assembly comprises a pancake lens.

7. The optical module of any preceding claim, wherein the primary optical element and the secondary optical element each comprise a meniscus lens and/or each comprise a mirrored surface.

8. The optical module of any preceding claim, wherein the primary optical element is spaced away from the secondary optical element; and preferably
wherein the primary optical element is spaced away from the secondary optical element by an air gap.

9. The optical module of any preceding claim, wherein a spacing between the primary optical element and the secondary optical element along the optical axis is adjustable; and/or preferably
wherein a working distance between the lens assembly and the electronic display is adjustable.

10. The optical module of any preceding claim, wherein the primary optical element comprises a beamsplitter element and the secondary optical element comprises a reflective polarizer.

11. A pancake lens comprising:
a primary optical element configured to receive image light from a display, the primary optical element configured to be rotatable about an optical axis and comprising a primary cylindrical surface profile; and
a secondary optical element configured to receive the image light from the primary optical element, the secondary optical element configured to be rotatable about the optical axis and comprising a secondary cylindrical surface profile.

12. The pancake lens of claim 11, wherein the primary cylindrical surface profile and the secondary cylindrical surface profile each comprise approximately 2.5 D of cylindrical power.

13. The pancake lens of claim 11 or claim 12, wherein:
the primary optical element comprises a primary aspherical surface profile and the primary cylindrical surface profile is overlaid on the primary aspherical surface profile; and
the secondary optical element comprises a secondary aspherical surface profile and the secondary cylindrical surface profile is overlaid on the secondary aspherical surface profile.

14. A method comprising:
directing image light along an optical axis and through a pancake lens comprising a primary optical element having a primary cylindrical surface profile and a secondary optical element having a secondary cylindrical surface profile;
rotatably aligning the primary optical element with a first direction; and
rotatably aligning the secondary optical element with a second direction to provide astigmatism correction to the image light.

15. The method of claim 14, wherein rotatably aligning the primary and secondary optical elements comprises aligning the primary optical element with respect to the secondary optical element, and aligning both the primary optical element and the secondary optical element with respect to a fixed datum.
